# EUROPEAN PATENT APPLICATION

(11) **EP 4 654 071 A1**
(43) Date of publication of application: **26.11.2025**
(21) Application number: 25315164.1
(22) Date of filing: 15.05.2025
(51) Int. Cl.: G06F 30/39, G06F 115/12

(54) **PERIPHERALS AND BUS CONFIGURATION FOR INTERCONNECTING ELECTRONIC PARTS AND DEVICES**

(30) Priority: 21.05.2024 US 202418669919
(71) Applicant: STMicroelectronics International N.V., 1228 Plan-les-Ouates, Geneva (CH)
(72) Inventor: Celetto, Luca, 33100 Udine (IT); Pastor, Florent, 06600 Antibes (FR); Grandin, Emmanuel, 44580 Villeneuve-en-Retz (FR); Vilei, Antonio, 73100 Lecce (IT); Martin, Thomas, 06740 Châteauneuf-grasse (FR); Mondoloni, Pascale, 06560 Valbonne (FR); Oliva, Silvio Lucio, 73019 Trepuzzi (IT)
(74) Representative: Cabinet Beaumont

(57) **Abstract**

A computer-implemented method includes: for each pin of a part on a physical or virtual board, determining a signal inbounding or outbounding the pin and creating an association between the signal and the pin, and determining a shortest path connection between the pin and a pin of a configuration target and creating a mapping between the pin of the selected part and the pin of the configuration target; merging the associations and the mappings to detect whether there is an incompatible signal associated with a pin of the part; and responsive to detecting an incompatible signal, searching for an alternative hardware configuration to change at least one mapping.

## Description

### BACKGROUND

### Technical Field

The present disclosure relates to the field of hardware configuration. The present disclosure relates more particularly to hardware configuration regarding a microcontroller unit or other configuration target that interconnects with and controls board parts (e.g., electronic parts or devices) on one or more printed circuit boards.

### Description of the Related Art

An electronic circuit board (e.g., a printed circuit board (PCB)), is a medium used to connect or "wire" components to one another in a circuit. Electronic circuit boards are used in nearly all electronic products. A microcontroller or microcontroller unit (MCU) is a small computer on a single integrated circuit. An MCU can include one or more processor cores along with memory and programmable input/output peripherals. Microcontrollers are used in automatically controlled products and devices, such as automobile engine control systems, implantable medical devices, remote controls, office machines, appliances, power tools, toys, and other embedded systems. There remains a need for efficient and flexible technology directed to hardware configuration regarding an MCU or other configuration target that interconnects with and controls board parts (e.g., electronic parts or devices) on one or more electronic circuit boards.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### BRIEF SUMMARY

For many microcontrollers or other configuration target (CT), some of their pins can be configured in multiple ways and can have different functionalities based on the chosen configuration. There are some hardware limitations that require analysis of datasheet and reference manuals of the CT to find out exactly which specific functionalities can be enabled for a given pin. Besides, when using such a CT, there can be many different variants, having different number of pins and associated functionalities for each pin. In such a complex and variegated environment, configuring the CT in order to control a device (e.g., a microphone) is much more complicated than in a static hardware configuration environment (e.g., where the functionality of each pin is predefined, and doesn't need or cannot be configured by the CT firmware).

Typically, to implement the CT firmware to control board parts that are located on expansion boards dynamically connected to a mother board (where CT resides) via one or more connectors (or wires), the schematics of both the mother board and expansion boards and the connectors need to be analyzed, and the wires between them need to be followed to derive the data required to configure the CT appropriately. If more expansion boards are further connected, electrical incompatibilities may occur, and need to be resolved. New wires may be added to extend the functionalities and/or use breadboards to organize the connections.

Embodiments of the present disclosure provide a computer-implemented method to automatically resolve the connections across the connectors and wires among the mother board and expansion board(s), and to detect and resolve electrical incompatibilities. The method includes: receiving netlist representation of a mother board and at least one expansion board, wherein in accordance with the netlist representation, for each part on the mother board and on the at least one expansion board: the part corresponds to a distinct master node in the netlist representation, and each pin of the part corresponds to a distinct pin node that has a direct link to the master node; creating at least one link between at least one node of the mother board and at least one node of the at least one expansion board based on physical connection between the mother board and the at last one expansion board; incorporating the created at least one link into the netlist representation to logically merge the mother board and the at least one expansion board into a single virtual board; and performing connection path search on the single virtual board, as represented in accordance with the netlist representation, between (a) a pin of a selected part on the mother board or on the at least one expansion board and (b) a configuration target including at least one microprocessor on the mother board or on the at least one expansion board.

Typically, to implement the CT firmware to control a board part (e.g., a microphone) on an existing board, the board schematics and the related board part datasheets/reference manuals need to be analyzed to understand the pin connections between the CT and the board part. Then the CT needs to be configured, e.g., to enable the communication bus and other general-purpose input/output (GPIO) with that board part, while ensuring that the right pins are selected and properly configured. If a conflict arises, some device need be disabled, or new hardware configurations be tested.

Embodiments of the present disclosure provide a computer-implemented method for configuring the CT to interconnect one or more board parts, including: for each pin of a plurality of pins of a selected part on a physical or virtual board, determining a signal that is configured to come in and out of the pin and creating an association between the signal and the pin; for each pin of the plurality of pins of the selected part on the physical or virtual board, determining a connection path between the pin and a pin of a configuration target and creating a mapping between the pin of the selected part and the pin of the configuration target; merging the associations and the mappings for the plurality of pins of the selected part to detect whether there is an incompatible signal associated with a pin of the selected part; and performing at least one of: responsive to detecting an incompatible signal associated with a pin of the selected part, searching for an alternative hardware configuration including changing electrical board routing to change at least one mapping between a pin of the selected part and a pin of the configuration target; or responsive to detecting no incompatible signal associated with any pin of the selected part, grouping at least a subset of the plurality of pins of the selected part into one or more buses.

When a board part is connected to the CT, it may require that some CT peripherals are activated in a specific way, and that some pins on the CT package are dedicated to implement a specific peripheral functionality. In the case of a single board part connected to the CT peripheral, the range of configurations that this peripheral can accept is determined by the board part that is connected to it. Any conflict can be detected and resolved, according to the board configuration and active devices.

Embodiments of the present disclosure provide a computer-implemented method for CT peripheral configuration based on board part interconnections, including: for each configuration target (CT) pin of a subset of CT pins that are grouped using a distinct semantic label associated with a board part, selecting a CT signal among supported CT signals for the CT pin, wherein the CT signals selected for the subset of CT pins correspond to a target CT peripheral instance of a plurality of CT peripheral instances; determining whether the CT signals selected are available for use and whether the target CT peripheral instance is available to be assigned; and performing at least one of: responsive to determining that the CT signals selected are available for use and the target CT peripheral instance is available to be assigned: associating the subset of CT pins with the CT signals selected and assigning the target CT peripheral instance to the board part; and marking the CT signals selected as unavailable for use and the target CT peripheral instance as unavailable to be assigned; or responsive to determining that the CT signals selected are unavailable for use or the target CT peripheral is unavailable to be assigned: searching for an alternative hardware configuration of a physical or virtual board that accommodates the CT and the board part, including changing electrical board routing, for example, by changing configuration of at least one of a soldered bridge, switch, or jumper.

When using multiple board parts connected to the same CT peripheral interface (e.g., a bus), proper configuration needs to be performed for all the CT peripherals related to the interface with the board parts, taking into account various configuration constraints derived from the connection of the CT and the board parts. For example, finding minimum and maximum working frequencies that work for all connected board parts and CT on the same bus, configuring CT clock to ensure that all the frequencies constraints are met (e.g., when using MEMS microphones), managing CT peripheral operational modes impact on other related pins (e.g., an additional chip select pin may be needed), handling interrupt conflicts on same line but different ports, or the like.

Embodiments of the present disclosure provide a computer-implemented method for configuring a CT peripheral based on the constraints injected by multiple board parts, including: for each board part of a set of board parts configured to connect to a configuration target (CT) peripheral instance of a CT, obtaining part characteristics for operating the board part; determining a minimum subset of compatibility parameters among the part characteristics obtained for operating individual board parts of the set of board parts; determining whether the minimum subset of compatibility parameters is compatible with the CT peripheral instance; and performing at least one of: responsive to determining that the minimum subset of compatibility parameters is compatible with the CT peripheral instance, applying to the CT peripheral instance the minimum subset of compatibility parameters; or responsive to determining that the minimum subset of compatibility parameters is incompatible with the CT peripheral instance, searching for an alternative hardware configuration of a physical or virtual board that accommodates the CT and the set of board parts, including changing electrical board routing, for example, by changing configuration of at least one of a soldered bridge, switch, or jumper.

### BRIEF DESCRIPTION OF THE SEVERAL VIEWS OF THE DRAWINGS

Figure 1 is a block diagram of a hardware configuration system according to some embodiments.
Figure 2 is a block diagram illustrating elements of an example computing device or system utilized in accordance with some embodiments of the techniques described herein.
Figure 3 is a flow diagram illustrating an example process for automatically resolving the connections across the connectors and wires among a mother board and expansion board(s), according to some embodiments.
Figure 4 is a flow diagram illustrating an example process for configuring a configuration target to interconnect one or more selected board parts, according to some embodiments.
Figure 5 is a flow diagram illustrating an example process for configuring peripheral(s) of a configuration target based on individual board part interconnections, according to some embodiments.
Figure 6 is a flow diagram illustrating an example process for configuring a configuration target peripheral based on the constraints injected by multiple board parts, according to some embodiments.
Figure 7 is a block diagram illustrating an example implementation of a stage of the system shown in Figure 1, according to some embodiments.
Figure 8 shows an example of an active part and non-active part as specified in a netlist, according to some embodiments.
Figure 9 shows an example of a representation of a board part having multiple pins, according to some embodiments.
Figure 10 shows an example of a net, representing a connection between parts, according to some embodiments.
Figure 11 shows an example of connection path search based on a graph representing a board, according to some embodiments.
Figure 12 shows examples of physical connections to additional board(s) or standalone part(s), according to some embodiments.
Figure 13 shows an example of connection path search based on a graph representing a virtual board, according to some embodiments.
Figure 14 shows an example of resolving signals from a board part pin, according to some embodiments.
Figures 15 and 16 show an example of resolving wires between a configuration target and board part(s), according to some embodiments.
Figure 17 shows an example of changing hardware configuration for alternative exploration, according to some embodiments.
Figure 18 shows an example of detecting and configuring CT peripherals, according to some embodiments.
Figure 19 shows an example of allocating CT peripherals based on resources and configuring them according to limitations, according to some embodiments.

### DETAILED DESCRIPTION

The following description, along with the accompanying drawings, sets forth certain specific details in order to provide a thorough understanding of various disclosed embodiments. However, one skilled in the relevant art will recognize that the disclosed embodiments may be practiced in various combinations, without one or more of these specific details, or with other methods, components, devices, materials, etc. In other instances, well-known structures or components that are associated with the environment of the present disclosure, including but not limited to the communication systems and networks and the environment, have not been shown or described in order to avoid unnecessarily obscuring descriptions of the embodiments. Additionally, the various embodiments may be methods, systems, media, or devices. Accordingly, the various embodiments may combine software and hardware aspects. As an example, the following list includes certain terms and acronyms used herein.
- Board configuration: a combination of settings for the soldered bridges, jumpers, switches, or any other electronical configuration means that produces an expected behavior on the board.
- Board part: an electronic device, other than the configuration target (CT), that is mounted on one of the electronic circuit boards of a Hardware (HW) platform including the CT.
- Breadboard: a flexible electronic circuit board that allows experimenting and organizing electrical wires between electronic circuits prototypes, without designing a dedicated board.
- Bus: a communication system that transfers data between components inside a computer, or between computers.
- Configuration Target (CT): an MCU or other CPU that is the target for hardware configuration via the presently disclosed technology.
- Central Processing Unit (CPU): a programmable hardware device that executes instructions of a computer program, such as arithmetic, logic, controlling, and input/output (I/O) operations.
- CT peripherals: an electronic component (e.g., often embedded in a chip package) that implements an electronic peripheral functionality, such as "General Purpose IO" (GPIO) or "Serial Peripheral Interface" (SPI).
- Expansion board: an electronic circuit board containing electric circuits connecting hardware components through wires and intended to expand the functionalities of a mother board, usually linked to the mother board through some connectors.
- Hardware (HW) conflict: an error that occurs when two devices are connected or configured in a way that imposes conflicting electric values.
- Hardware (HW) part limitations: specific configuration requirements that a board part is imposing on connection wires in order to work properly. For example, some wires need an SPI bus electronic function to be implemented, working within a specific range of frequencies.
- HW platform: a mother board, optionally connected to one or more expansion boards.
- HW platform configuration: the aggregation of the configurations settings of the boards contained into an HW platform.
- Jumper (JP): an HW item that connects two points of the schematic to close an electric circuit. JP is conceptually similar to soldered bridge, but can be more expensive and require more space.
- Mother board: an electronic board containing electric circuits connecting hardware components through wires and including a configuration target (CT). The mother board may contain ways to expand its functionalities through connector plugs.
- Netlist: a description of the connectivity of the electronic circuit board, e.g., with details about how the pins of different board parts are connected among each other.
- Pinout: a cross-reference between the contacts, or pins, of an electrical connector or electronic component, and their functions.
- Soldered bridge (SB): a point on the board where the wire is intentionally interrupted, allowing to enable a connection by soldering a conductive element to fill the gap (and thus close the circuit) or leave it open. The manufacturer of the board and the user of the board can decide whether they want to keep the corresponding connection open or closed.
- Switch (SW): an electronic switch may connect two or more points creating an electric circuit. It can be more expensive but more flexible than jumper.

Throughout the specification, claims, and drawings, the following terms take the meaning explicitly associated herein, unless the context clearly dictates otherwise. The term "herein" refers to the specification, claims, and drawings associated with the current application. The phrases "in one embodiment," "in another embodiment," "in various embodiments," "in some embodiments," "in other embodiments," and other variations thereof refer to one or more features, structures, functions, limitations, or characteristics of the present disclosure, and are not limited to the same or different embodiments unless the context clearly dictates otherwise. As used herein, the term "or" is an inclusive "or" operator, and is equivalent to the phrases "A or B, or both" or "A or B or C, or any combination thereof," and lists with additional elements are similarly treated. The term "based on" is not exclusive and allows for being based on additional features, functions, aspects, or limitations not described, unless the context clearly dictates otherwise. In addition, throughout the specification, the meaning of "a," "an," and "the" include singular and plural references.

References to the term "set" (e.g., "a set of items"), as used herein, unless otherwise noted or contradicted by context, is to be construed as a nonempty collection comprising one or more members or instances.

References to the term "subset" (e.g., "a subset of the set of items"), as used herein, unless otherwise noted or contradicted by context, is to be construed as a nonempty collection comprising one or more members or instances of a set or plurality of members or instances.

Moreover, the term "subset," as used herein, refers to a proper subset, which is a collection of one or more members or instances that are collectively smaller in number than the set or plurality of which the subset is drawn. For instance, a subset of a set of ten items will have less than ten items and at least one item.

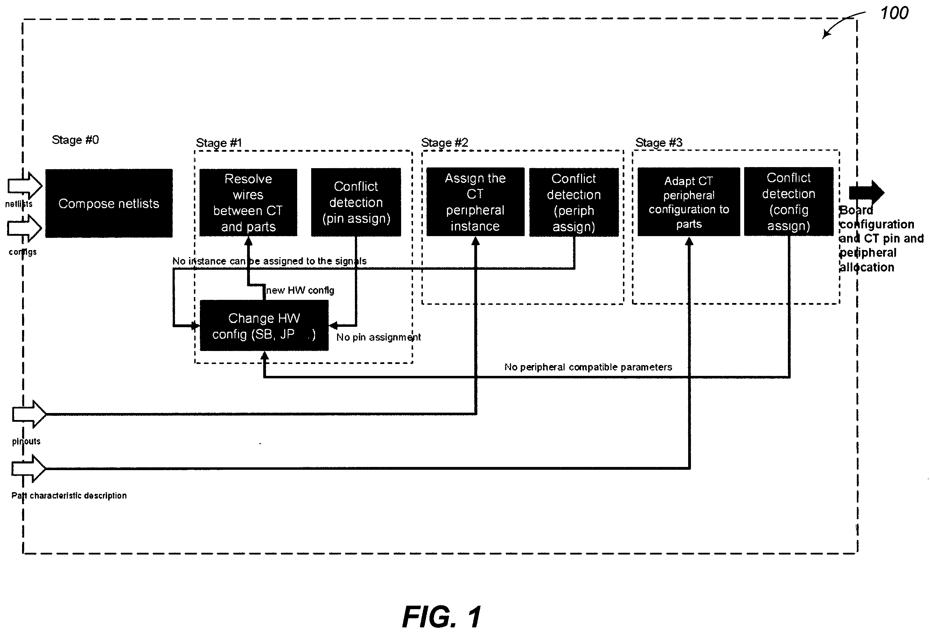

Figure 1 is a block diagram of a hardware configuration system 100, according to some embodiments. As illustrated, the inputs to the system 100 can include netlists and HW configurations (e.g., whether a SB is closed or open) of one or more boards selected as an HW platform, as well as pinouts and characteristic description (e.g., HW part limitations) of one or more board parts to potentially be used in the HW platform. The inputs can be received by the system in a standard format, such as HW board pack(s) and HW part pack(s) in Open-CMSIS-Pack (OCP) format.

As an example, in the context of the configuration of a system-on-a-chip (SoC) device (e.g., an MCU) present on a printed circuit board (PCB), the system 100 can determine the way each of the other board parts present on this PCB are connected to the SoC device to be configured. Here, the SoC device is the configuration target (CT).

The determination is achieved, for each board part on the PCB, by analyzing the routing of the electrical lines of the PCB (e.g., analyzing the netlist of the PCB) to identify each pin of the board part and the way this pin is connected to the CT. The routing of the PCB can depend on PCB configuration choices (jumpers, solder bridges, or switches) that may affect the way each board part is connected or not to the CT. When a board part cannot be connected to the CT with the current routing, alternative PCB routings can be automatically searched for by changing some PCB configuration choices to find a matching PCB routing.

Once a matching PCB routing is found, for each pin of each board part present on the same PCB than the CT, the system 100 can determine on which pin of the CT it is routed, which is the logical signal transported over the electrical line, and whether this signal is part of a bus protocol. In some embodiments, instead of the PCB or other physical electronic circuit board, a virtual board that merges multiple physical boards can be used as the basis for the determinations, analyses, and other processes associated with configuring the CT.

The system 100 can combine or aggregate data regarding pinout of CT and board parts, netlist (or other wiring representation) of a single board or a combination of boards, bus information to group signals/pins related to peripherals, hardware limitations or other constraints (e.g., clock, configurability options, etc.), memory mapping (e.g., for DMA). Based on the aggregated information, the system 100 can automatically resolve the hardware constraints and identify which communication buses to use, on which pins, at which frequency, so that the correct configuration options are automatically selected for the CT firmware and for the part drivers. The system 100 or another system that receives the configuration options can generate firmware configuration codes to apply to the CT and the board parts.

As shown in Figure 1, the system 100 can include four stages: stage #0 relates to composing or merging representation of multiple boards to create a representation of a single virtual board of the HW platform; stage #1 relates to computing the wiring connections between the CT and the board parts that are present on the HW platform; stage #2 relates to configuring CT peripherals based on the connection of individual board parts; and stage #3 relates to configuring CT peripherals based on the constraints injected by multiple board parts.

More particularly for stage #0, in the context of the configuration of the CT (e.g., an SoC device) present on a printed circuit board (PCB), the system 100 can combine the information coming from several such PCBs, with one of them holding the CT to be configured, and create a logical union of all those PCBs as a single "virtual" PCB description to be used in further configuration operations. Connecting PCBs together is usually performed by using physical connectors (that can be standard or not) or even using "floating wires" directly soldered on the PCBs (or using wires having one at least end connected into a physical connector (not soldered)). To be able to "virtually" merge those PCBs, a logical description of each PCB is obtained, including the list of board parts present on the PCB (including connectors) as well as the routing of the electrical lines of the PCB (e.g., in netlist format) that are linking all the PCB parts together. Inter-PCB connection information can also be obtained, such as the male/female connectors that are linked together, or the position of a floating wire soldering or connector pin. "Merging" together several PCBs can include merging their lists of parts (and resolving naming conflicts if applicable), and merging their netlists based on the inter-PCB connection information. Netlist-level conflicts can also be solved in some embodiments.

More particularly for stage #1, in the context of the configuration of the CT present on a physical board (e.g. a PCB) or virtual board (e.g., that merges multiple PCBs), the system 100 can determine the way each of the other board parts present on the board are connected to the CT to be configured. The board information can be the one obtained from stage #0 of system 100, or from another device or system. The connection determination can be achieved, for each such board part on the board, by analyzing the routing of the electrical lines of the board (e.g., as represented in a netlist format) to identify each pin of the board part and the way this pin is connected to the CT. The routing of the board can depend on board configuration choices (e.g., jumpers, solder bridges, switches) that may affect the way each board part is connected or not to the CT. When a board part cannot be connected to the CT with the current routing, alternative board routings can be automatically searched for by changing some board configuration choices to find a matching routing. Once a matching board routing is found, for each pin of each board part present on the board, the system 100 can determine on which pin of the CT it is routed, which is the logical signal transported over the electrical line corresponding to the route, and whether this signal is part of a bus protocol.

More particularly for stage #2, in the context of the configuration of the CT present on a physical or virtual board, the system 100 can determine which CT peripheral instances can be used to connect to each of the other board parts present on the board, and how the CT pinout mapping can be configured to enable the connections. The board information can be obtained from stage #1 of system 100, or from another device or system. To achieve the peripheral instance determinations, the system 100 can obtain structured information describing all the peripheral instances of the CT (e.g., UART or I2C instances) and all the pinout mapping possibilities to link such peripheral instances to physical CT package pins. The system 100 can also obtain information including, for each pin of the other board parts present on the board: which pin of the CT it is routed on, which is the logical signal transported over the routed electrical line, and whether this signal is part of a bus protocol, to facilitate the determinations.

More particularly for stage #3, in the context of the configuration of the CT present on a physical or virtual board, the system 100 can determine the optimal configuration of the CT peripheral instances that can be used to connect to each of the other board parts present on the board and resolve potential conflicts. The board information can be obtained from stage #0 of the system 100, or from another device or system. To achieve the CT peripheral instance configuration determination, the system 100 can obtain structured information describing the CT peripheral instances that can be used to connect to each of the other board parts present on the board, and especially if such a CT peripheral instance is shared among several board parts. This information can be obtained from the stage #2 of the system 100, or from another device or system. The system 100 can also obtain information including, for each part connected to the CT according to the information above, the actual or potential constraints and characteristics (e.g., bus working frequency, SPI polarity, I2C address, or the like) of this part, that can be used to configure the corresponding CT peripheral instance and/or to resolve conflicts. Such information can then be used to determine the optimal configuration of each used CT peripheral instance according to the constraints and characteristics of the board parts connected to it (e.g., to set a bus working frequency compatible with all the parts connected to the same bus), and to detect conflicts (e.g., the same I2C slave address is used twice on the same bus).

Conflict resolution can involve changing the way conflicting board parts are connected to the CT, which, for example, can be performed in stage #1 of the system 100; the system 100 can determine again which CT peripheral instances can be used, which, for example, can be performed in stage #2 of the system 100.

The system 100 can output various HW configuration information including board configuration, CT pin and peripheral allocation, peripheral configuration, board part configuration, or the like. This output can be firmware configuration code or a basis for generating applicable firmware configuration code to apply to the CT and relevant board parts.

Figure 1 illustrates the data flow and interactions among inputs to the system and the stages themselves. The data flow and interactions can be achieved using applicable communication connections (not shown). The communication connections may include one or more hardwires, one or more computer networks, one or more wired or wireless networks, satellite transmission media, one or more cellular networks, or some combination thereof. The communication connections may include a publicly accessible network of linked networks, possibly operated by various distinct parties, such as the Internet. The communication connections may include other network types, such as one or more private networks (e.g., corporate or university networks that are wholly or partially inaccessible to non-privileged users), and may include combinations thereof, such that (for example) one or more of the private networks have access to and/or from one or more of the public networks. Furthermore, the communication connections may include various types of wired and/or wireless networks in various situations, including satellite transmission. In addition, the communication connections may include one or more communication interfaces including radio frequency (RF) transceivers, cellular communication interfaces and antennas, USB interfaces, ports and connections (e.g., USB Type-A, USB Type-B, USB Type-C (or USB-C), USB mini A, USB mini B, USB micro A, USB micro C), other RF transceivers (e.g., infrared transceivers, connection interfaces based on IEEE 802.15.4 OpenThread protocol, Zigbee^{®} protocol, or IEEE 802.15.4 MAC layer, Z-Wave^{®} connection interfaces, wireless Ethernet ("Wi-Fi") interfaces, short range wireless (e.g., Bluetooth^{®}, Bluetooth^{®} Low Energy (BLE)) interfaces or the like.

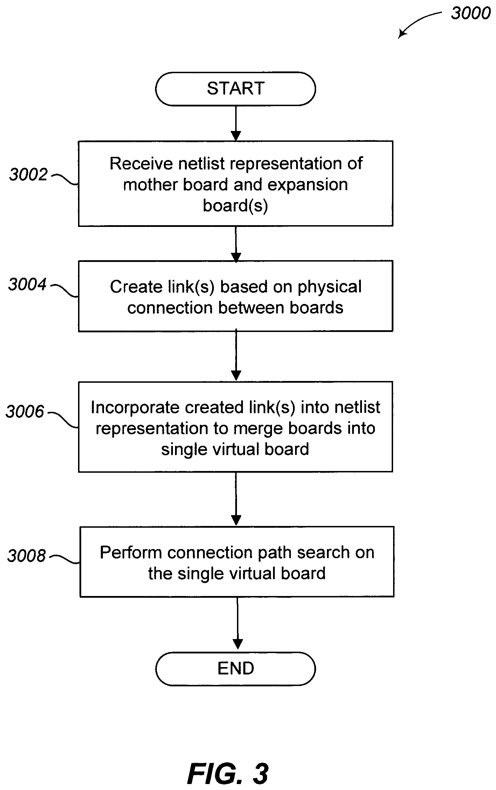

Figure 3 is a flow diagram illustrating an example process 3000 for automatically resolving the connections across the connectors and wires among the mother board and expansion board(s). The process 3000 can be implemented, in part or in whole, via a system such as the system 100 (e.g., stage #0) shown in Figure 1. In some embodiments, at least part of the process 3000 is performed in real-time relative to the extraction and generation of netlists of the boards.

The process 3000 starts at block 3002, where netlist representation of a mother board and at least one expansion board is received. For example, in accordance with the netlist representation, for each board part on the mother board and on the expansion board(s): the part corresponds to a distinct master node in the netlist representation, and each pin of the part corresponds to a distinct pin node that has a direct link to the master node.

At block 3004, at least one link between at least one node of the mother board and at least one node of the expansion board(s) is created based on physical connection between the mother board and the expansion board(s).

At block 3006, the created link(s) are incorporated into the netlist representation to logically merge the mother board and the expansion board(s) into a single virtual board.

At block 3008, connection path search is performed on the single virtual board, as represented in accordance with the netlist representation, between a pin of a part on the mother board or on the expansion board(s) and a CT (e.g., one of CT pins) on the mother board.

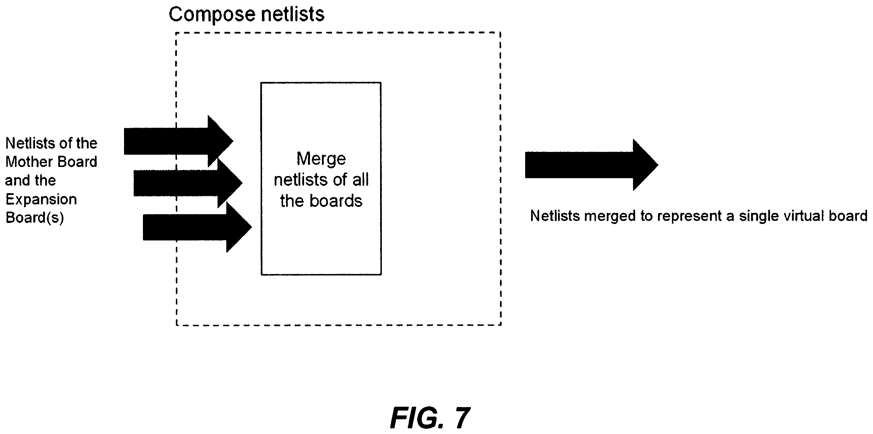

Figure 7 is a block diagram illustrating an example implementation of stage #0 of the system 100 shown in Figure 1. In some embodiments, Figure 7 corresponds to Figure 3 as well. As shown in Figure 7, netlists of the mother board and one or more expansion boards are input into the system 100 for processing. The system 100 merges netlists of all the boards and outputs a representation of a single virtual board (e.g., a single, merged netlist).

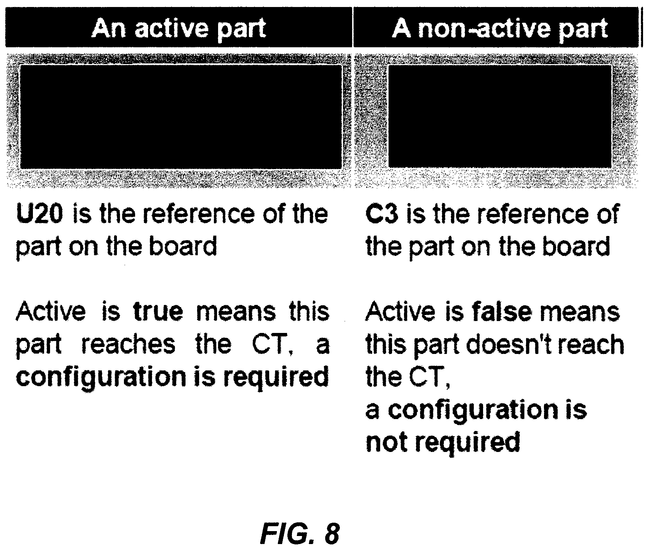

Figures 8-13 illustrate various aspects of netlist merging, in accordance with the process 3000 of Figure 3 and/or the stage #0 of the system 100 shown in Figure 1.

Illustratively, for each pin from each part on the board (e.g., the mother board where CT resides), its corresponding CT pin is to be automatically computed, and the route between the CT pin and the part pin is to be automatically determined. A netlist can include all the electrical connections "point-to-point" of the board, and can include all the parts and test-points of the board. Here, a part can be a connector, an electrical component, a sensor, or other entity on the board that has pins. For each part, the netlist can specify its status, for example, as:
▪ Active: the part reaches the CT, a pin must be configured; or
▪ Not active: the part can be ignored by CT pinout configuration.

Figure 8 shows an example of an active part and non-active part as specified in a netlist.

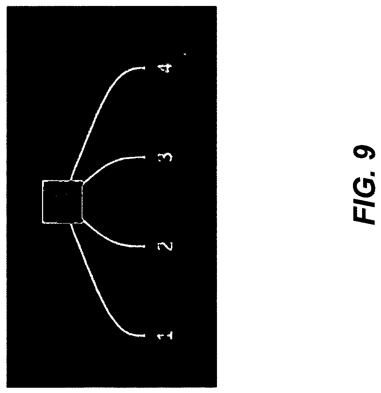

Each pin of each part is a node of a graph representing the board. Each part is represented or otherwise corresponds to a "master node" on the graph that is linked to every pin node. Figure 9 shows an example of a part U1 which has 4 pins (1, 2, 3, 4).

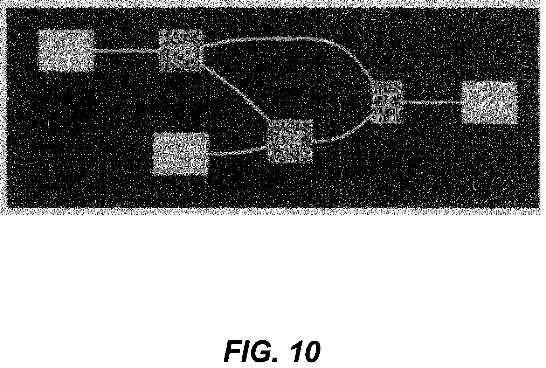

A net in the netlist, represents a connection between or among all the components of the net. Figure 10 shows an example of a net, representing a connection (e.g., being soldered together) between part U13's pin H6, part U20's pin D4, and part U37's pin 7, and 3 corresponding links included on the graph.

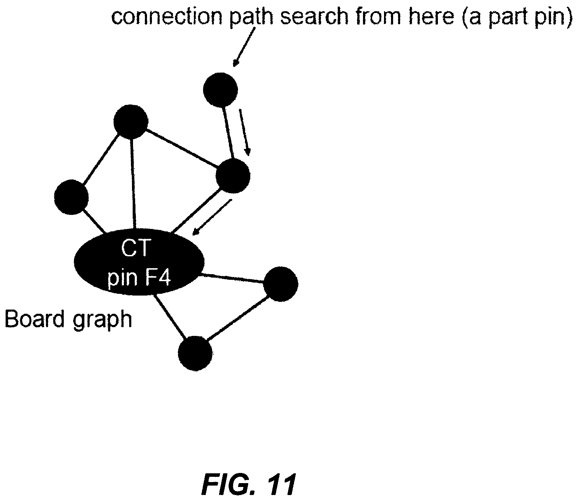

Figure 11 shows an example of connection path search based on the graph representing the board. The search can start from a part pin to reach a CT pin, e.g., using breadth-first search (BFS) or other applicable graph searching methods to find the shortest path from the part pin node to the CT pin node on the graph. In some embodiments, the system 100 selects some or all of the active part(s) and perform connection path search on their pins, while ignoring or otherwise excluding all of the non-active parts.

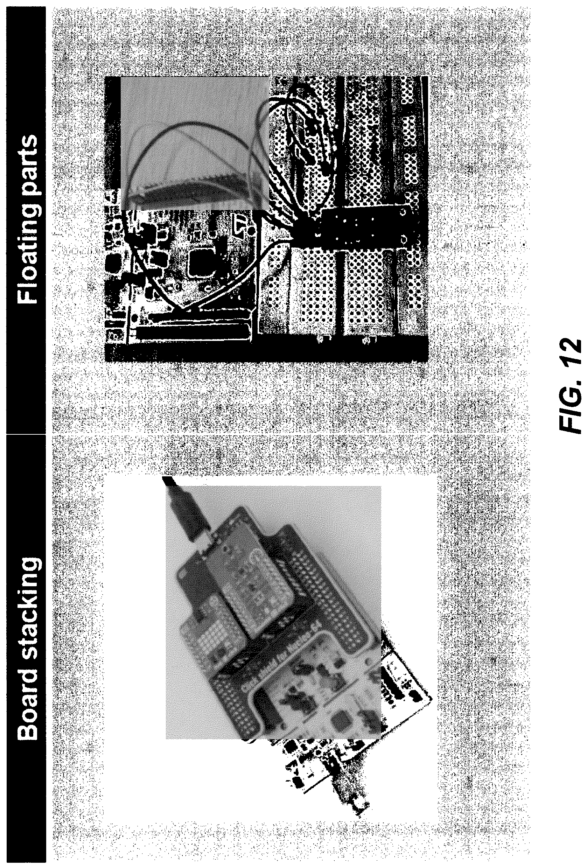

One or more boards (e.g., through connectors and/or floating wires) or standalone parts (e.g., through floating wires) can be added to the HW platform including the CT, and corresponding physical connections can be made. Figure 12 shows examples of physical connections to additional board(s) or standalone part(s), e.g., from the mother board.

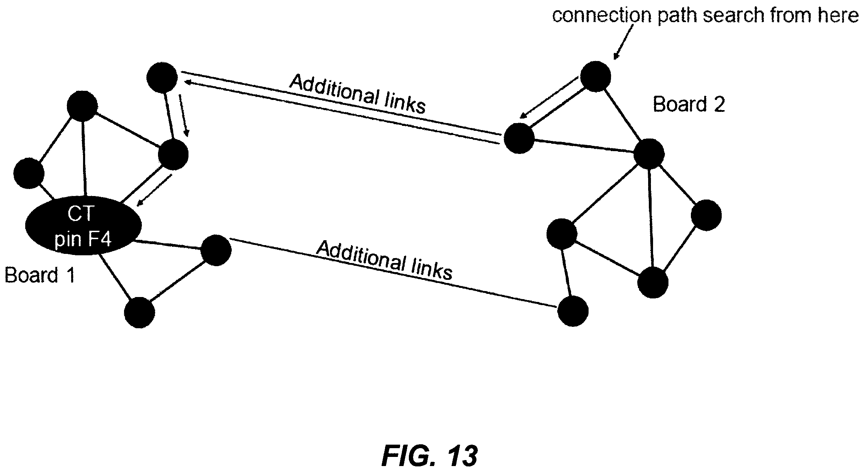

Illustratively, for each additional physical connection, it involves: a node of board 1's netlist and a node of board 2's netlist, or, a node of a board's netlist and a pin of a standalone part. A virtual net can be created on the graph to represent the additional physical connection, which can include a set of additional links on the graph to connect multiple netlists. In this way, multiple netlists representing multiple boards, representing one board with additional standalone part(s), or representing multiple boards with additional standalone part(s), can be merged into a single, larger graph or merged netlist representing a virtual board. Figure 13 shows an example of connection path search (e.g., using BFS) based on the larger graph representing the virtual board. In some embodiments, the system 100 selects some or all of the active part(s) and perform connection path search on their pins, while ignoring or otherwise excluding all of the non-active parts.

In accordance with the search, when a node is visited, the following can be performed:
∘ If the node is a pin of the CT, the search ends as the destination pin is found; or
∘ If the node is not a pin of the CT:
   ▪ Continue to visit next node(s),
   ▪ In some embodiments, when a node is visited, a set of checks can be performed to determine whether the path to the node currently visited should be eliminated. For example, if the node represents an electrical component (e.g., resistor, capacitor, or the like), the node results in a longer path, but the path is not eliminated and continues to visit next node(s).

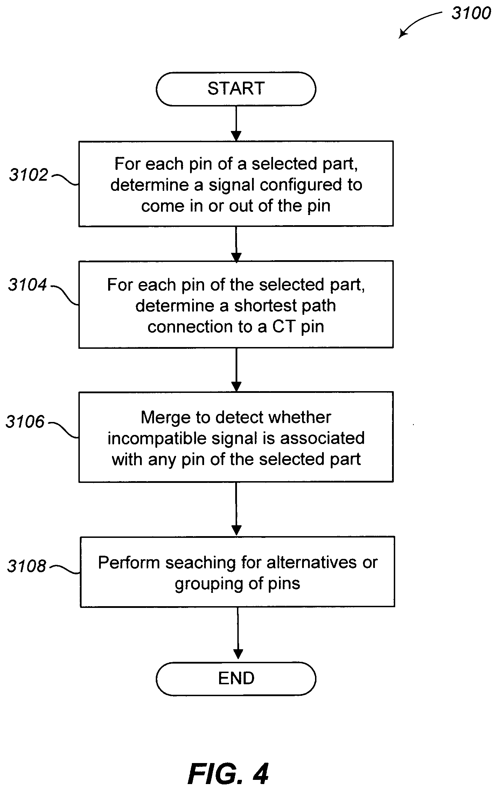

Figure 4 is a flow diagram illustrating an example process 3100 for configuring a CT to interconnect one or more selected board parts. The process 3100 can be implemented, in part or in whole, via a system such as the system 100 (e.g., stage #1) shown in Figure 1. In some embodiments, at least part of the process 3100 is performed in real-time relative to the selection of board part(s), e.g., by a user.

The process 3100 starts at block 3102, for each pin of the pins of a selected part on a physical or virtual board, a signal that is configured to come in and out of the pin is determined, to create an association between the signal and the pin.

At block 3104, for each pin of the pins of the selected part on the physical or virtual board, a shortest path connection between the pin and a pin of the CT is determined to create a mapping between the pin of the selected part and the pin of the CT. As will be described in more detail below, this mapping can ultimately affect the configuration of the configuration target itself.

At block 3106, the associations and the mappings for the pins of the selected part are merged to detect whether there is an incompatible signal associated with a pin of the selected part. Illustratively, an additional merge and check action is performed by aggregating the mappings of all selected parts to check for potential cross-parts incompatibilities (e.g., pins from multiple parts are mapped to a same CT pin (unless this is a bus, which can be confirmed at stage #2) or CT peripherals configurations are impacted by the CT pin assignment).

At block 3108, searching for alternative(s) or grouping of pins/signals are performed. Illustratively, the system 100 can perform at least one of: responsive to detecting an incompatible signal associated with a pin of the selected part, searching for an alternative hardware configuration including changing electrical board routing, for example, by changing configuration of at least one of a soldered bridge, switch, or jumper to change at least one mapping between a pin of the selected part and a pin of the CT; or responsive to detecting no incompatible signal associated with any pin of the selected part, grouping at least a subset of the plurality of pins (and their associated signals) of the selected part into one or more buses.

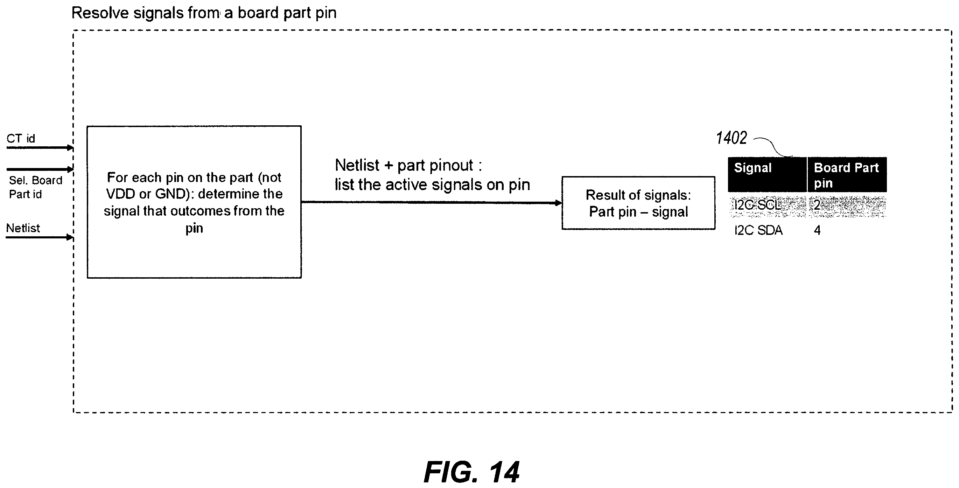

Figures 14-17 illustrate various aspects for configuring connections between the CT and board part(s), in accordance with the process 3100 of Figure 4 and/or the stage #1 of the system 100 shown in Figure 1.

Figure 14 shows an example of resolving signals from a board part pin. Illustratively, the system 100 can obtain an identifier of the CT, an identifier of a selected board part, as well as a netlist representing the corresponding HW platform (e.g., as a physical or virtual board) to process. For each pin on the part (not including VDD or GND in some embodiments), the system 100 can compute or otherwise determine the signal that is configured or expected to be inbounding or outbounding the pin. Using the netlist and part pinout information, the system 100 can identify the expected or otherwise active signals on each pin. The result can be organized into a database table or list 1402, associating each pin with its corresponding signal.

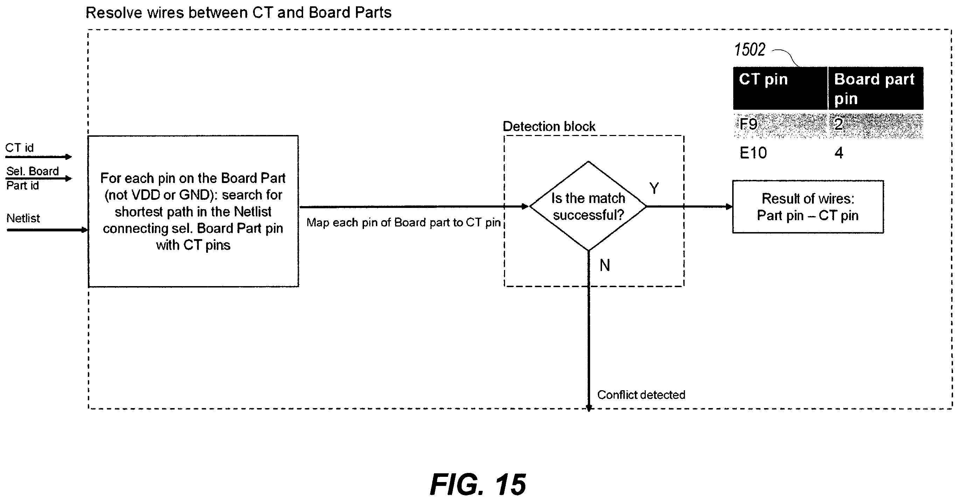

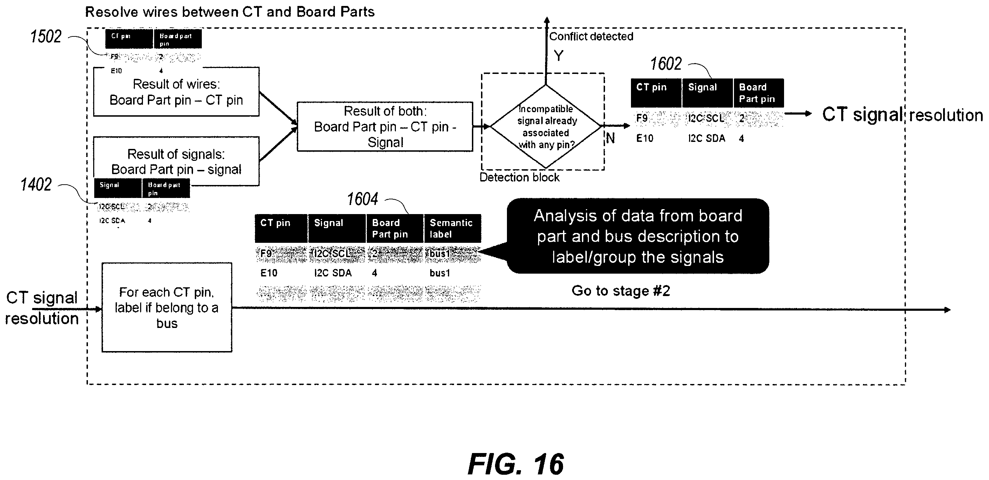

Figures 15 and 16 show an example of resolving wires between the CT and board part(s). Illustratively, with reference to Figure 15, the system 100 can obtain an identifier of the CT, an identifier of a selected board part, as well as a netlist representing the corresponding HW platform (e.g., as a physical or virtual board) to process. For each pin on the part (not including VDD or GND in some embodiments), the system 100 can search for a connection path (e.g., a shortest path) in the netlist to connect individual pins of the part with individual pins of the CT. In this way, the system 100 can map each pin of the part to a pin of the CT. The system 100 can detect if the mapping makes a successful match between the part pins and CT pins. If there is a conflict (e.g., overlap of pin mapping), the system 100 can mark the conflict so alternatives can be explored; if the mapping is a successful match, the result can be organized into a database table or list 1502, indicating the mapping between board part pins and CT pins.

Illustratively, with reference to Figure 16, the result of mapping between board part pins and CT pins (e.g., database table 1502) and the result of association between board part pins and signals (e.g., database table 1402) are merged or otherwise combined to create an association between board part pins, CT pins, and signals. The system 100 can detect whether there is an incompatible signal associated with any pin. If so, the system 100 can mark the conflict so alternatives can be explored; if not, the created association result can be organized into a database table or list 1602, to achieve CT signal resolution. Each CT pin or part pin (including associated signal) can be labeled or grouped as belonging to a bus. Illustratively, this can be achieved by analyzing data from the board part and bus description as applied to the signals associated with the pins. The labels or grouping information can be attached to the created association result, in a form of a database table or list 1604. This information can be fed into stage #2 of the system 100.

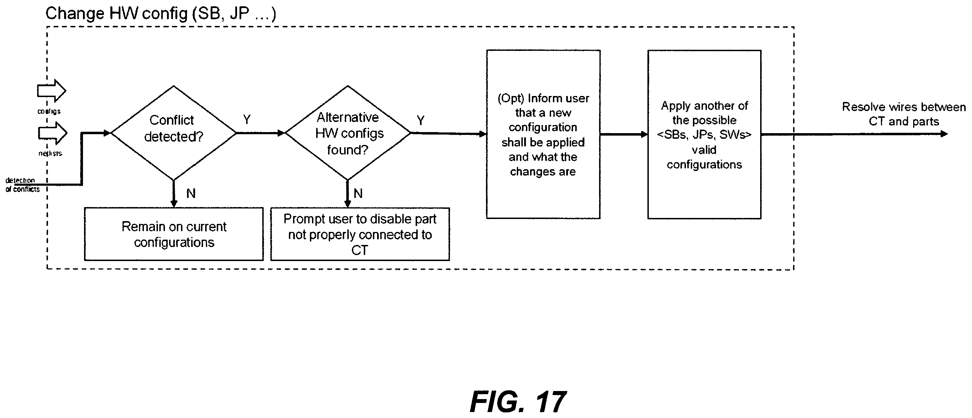

Figure 17 shows an example of changing hardware configuration for alternative exploration. Illustratively, the system 100 can obtain relevant configuration information and netlist(s) corresponding to the HW platform to process. If a conflict is detected (e.g., in stage #1, #2, and/or #3), the system 100 can proceed to search for alternative hardware configurations (e.g., by changing one or more of SB, JP, or SW settings or configurations) that may allow for another attempt at resolving the wires between the CT and board part(s). If no such alternative is found, the system 100 can automatically (or prompt a user to) disable one or more part(s) that are not properly connected to the CT. If an alternative is found, the system 100 can apply the valid changes to the hardware configurations and proceed to resolve wires between the CT and board part(s) (e.g., in stage #1). In some embodiments, the system 100 can inform the user of the hardware configuration changes, or requests user approval of such changes prior to applying them.

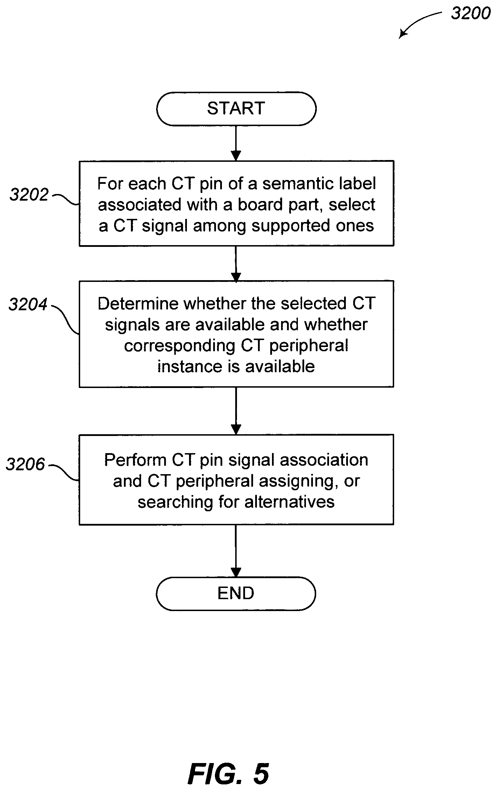

Figure 5 is a flow diagram illustrating an example process 3200 for CT peripheral configuration based on individual board part interconnections. The process 3200 can be implemented, in part or in whole, via a system such as the system 100 (e.g., stage #2) shown in Figure 1. In some embodiments, at least part of the process 3200 is performed in real-time relative to the completion of the process 3100.

The process 3200 starts at block 3202, where for each CT pin of a subset of CT pins that are grouped using a distinct semantic label associated with a board part, a CT signal among supported CT signals for the CT pin is selected based on a signal of a pin of the board part mapped to the CT pin. Here, the CT signals selected for the subset of CT pins correspond to a target CT peripheral instance of all CT peripheral instances.

At block 3204, whether the CT signals selected are available for use and whether the target CT peripheral instance is available to be assigned are determined.

At block 3206, CT pin signal association and CT peripheral assigning are performed, or alternative(s) are searched for. Illustratively, the system 100 can perform at least one of: responsive to determining that the CT signals selected are available for use and the target CT peripheral instance is available to be assigned: associating the subset of CT pins with the CT signals selected and assigning the target CT peripheral instance to the CT signals selected, and marking the CT signals selected as unavailable for use and the target CT peripheral instance as unavailable to be assigned; or responsive to determining that the CT signals selected are unavailable for use or the target CT peripheral is unavailable to be assigned: searching for an alternative hardware configuration of a physical or virtual board that accommodates the CT and the board part, including changing electrical board routing, for example, by changing configuration of at least one of a soldered bridge, switch, or jumper.

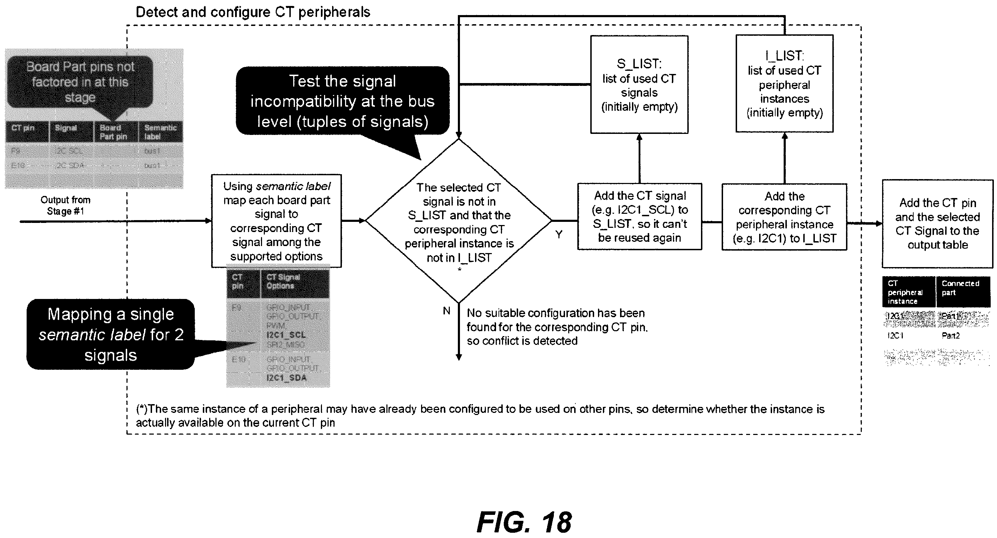

Figure 18 shows an example of detecting and configuring CT peripherals, in accordance with the process 3200 of Figure 5 and/or the stage #2 of the system 100 shown in Figure 1. Illustratively, at least part of the output (e.g., the database table or list 1604) from the resolving of wires between the CT and board part(s) as shown in Figures 15 and 16 (or from stage #1 in general) can be obtained by the system 100. In some embodiments, board part pins are not factored in or otherwise considered in detecting and configuring of CT peripherals, or in stage #2 in general. The system 100 can use semantic labels to map each board part's signal (or signal tuple) to a corresponding CT signal (or set of CT signals) selected from supported CT signal options. As an example shown in Figure 18, "I2C1_SCL" is a signal name. While there is no particular rule on its format or semantic, for simplicity of description, this signal name is associated (e.g., through an association table) with a description of a protocol. An illustrative interpretation is as follows:
- bus type: I2C
- CT peripheral instance: I2C1
- signal type: SCL,
Here, the semantic label "bus1" representing the signal tuple of a board part can be used to map to the CT signal "I2C1_SCL" selected for CT pin F9 (and similarly to CT signal "I2C1_SDA" selected for CT pin E10), where "I2C1" represents a CT peripheral instance.

Because the same CT peripheral instance may have already been configured to be used on other CT pins, to achieve proper configuration the system 100 can determine whether the instance is available for use with a CT pin under consideration in accordance with the mapping. Here, signal incompatibility can be tested at the bus level (or signal tuple level). An example test process is shown in Figure 18, where the system 100 can determine whether a CT signal selected for the CT pin is not in an S_List and the corresponding CT peripheral instance is not in an I_List. If so, the selected CT signal (e.g., "I2C1_SCL") is added to the S_List so that CT signal cannot be used again, the corresponding CT peripheral instance (e.g., "I2C1") is added to the I_List, and the CT pin and its selected CT signal is added to an output table. If not, the system 100 determines that no suitable configuration has been found for the CT pin, and marks a conflict as detected. With the detection of the conflict, the system 100 can perform alternative exploration, e.g., using the process as shown in Figure 17.

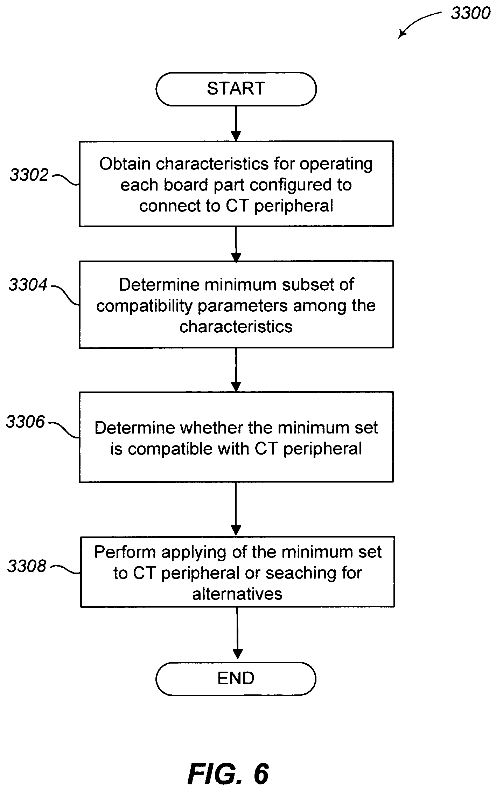

Figure 6 is a flow diagram illustrating an example process 3300 for configuring a CT peripheral based on the constraints injected by multiple board parts. The process 3300 can be implemented, in part or in whole, via a system such as the system 100 (e.g., stage #3) shown in Figure 1. In some embodiments, at least part of the process 3300 is performed in real-time relative to the completion of the process 3200.

The process 3300 starts at block 3302, where for each board part of a set of board parts configured to connect to a CT peripheral instance, part characteristics for operating the board part is obtained.

At block 3304, a minimum subset of compatibility parameters among the part characteristics obtained for operating individual board parts of the set of board parts is determined.

At block 3306, whether the minimum subset of compatibility parameters is compatible with the CT peripheral instance is determined.

At block 3308, the minimum set is defined or applied to the CT peripheral, or alternative(s) are searched for. Illustratively, the system 100 can perform at least one of: responsive to determining that the minimum subset of compatibility parameters is compatible with the CT peripheral instance, assigning or applying to the CT peripheral instance the minimum subset of compatibility parameters; or responsive to determining that the minimum subset of compatibility parameters is incompatible with the CT peripheral instance, searching for an alternative hardware configuration of a physical or virtual board that accommodates the CT and the set of board parts, including changing electrical board routing, for example, by changing configuration of at least one of a soldered bridge, switch, or jumper.

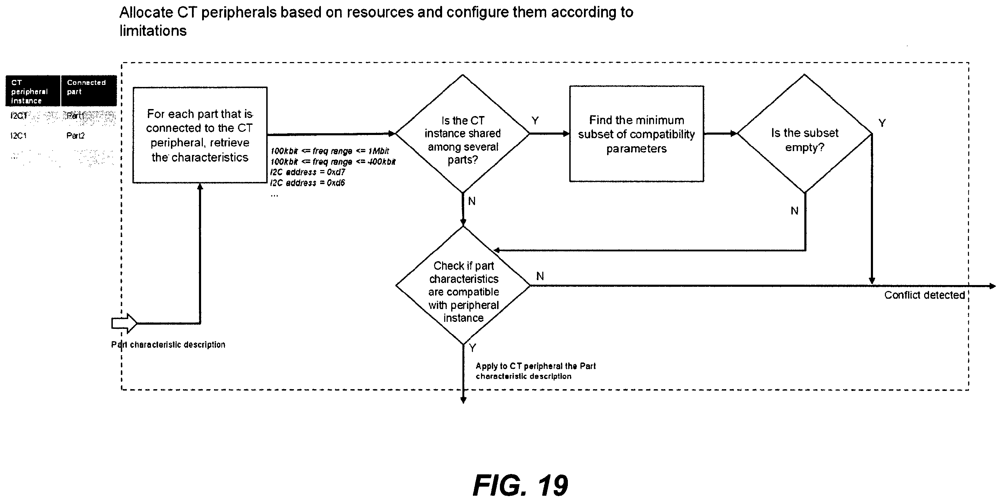

Figure 19 shows an example of allocating CT peripherals based on resources and configuring them according to limitations, in accordance with the process 3300 of Figure 6 and/or the stage #3 of the system 100 shown in Figure 1. Illustratively, at least part of the output (e.g., mappings between CT peripheral instances and connected board parts) from the detecting and configuring CT peripherals as shown in Figures 18 (or from stage #2 in general) can be obtained by the system 100. The system 100 can also obtain characteristic descriptions for a target CT peripheral instance and for its connected board part(s).

If the target CT peripheral instance is only connected to a single board part, the system 100 can determine whether the part's characteristics are compatible with the target CT peripheral instance. If so, the system 100 can apply the part characteristic (or any applicable portion thereof) to the target CT peripheral instance and configure it accordingly; if not, the system 100 can mark a conflict as detected.

If the target CT peripheral instance is shared among multiple board parts, the system 100 can attempt to determine a minimum subset of compatibility parameters among the characteristics of the multiple board parts. If the minimum subset is empty or otherwise cannot be found, the system 100 can mark a conflict as detected. Otherwise, the system 100 can determine whether the minimum subset is compatible with the target CT peripheral instance. If so, the system 100 can apply the minimum subset (or any applicable portion thereof) to the target CT peripheral instance and configure it accordingly; if not, the system 100 can mark a conflict as detected.

With the detection of any conflict, the system 100 can perform alternative exploration, e.g., using the process as shown in Figure 17.

Those skilled in the art will appreciate that the various operations depicted via Figures 1 and 3-19 as well as those described elsewhere herein, may be altered in a variety of ways. For example, the particular order of the operations may be rearranged; some operations may be performed in parallel; shown operations may be omitted, or other operations may be included; a shown operation may be divided into one or more component operations, or multiple shown operations may be combined into a single operation, etc.

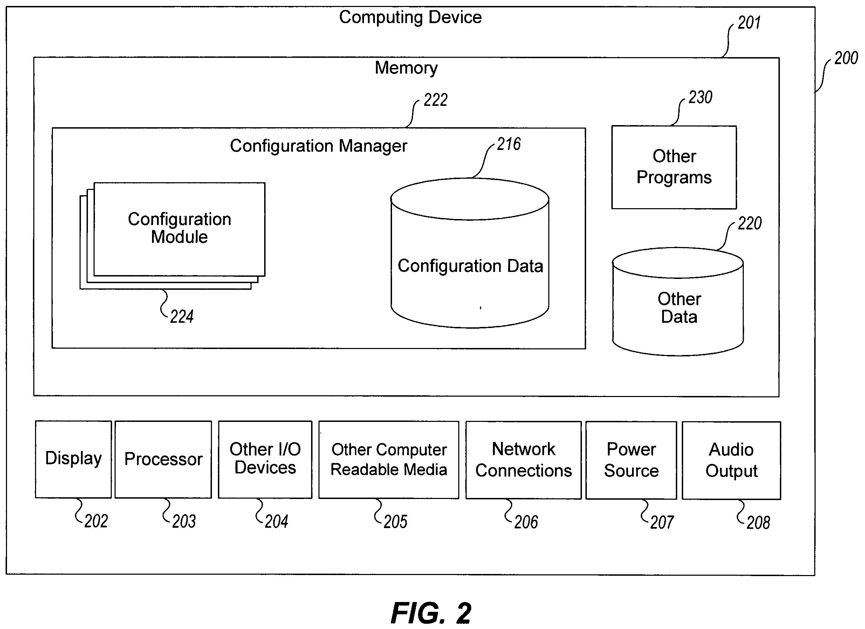

Figure 2 is a block diagram illustrating elements of an example computing device or system 200 utilized in accordance with some embodiments of the techniques described herein. Illustratively, the computing device 200 corresponds to a computing device implementing the system 100 of Figure 1, the process 3000 of Figure 3, the process 3100 of Figure 4, the process 3200 of Figure 5, the process 3300 of Figure 6, or at least a part thereof.

In some embodiments, one or more general purpose or special purpose computing systems or devices may be used to implement the computing device 200. In addition, in some embodiments, the computing device 200 may comprise one or more distinct computing systems or devices, and may span distributed locations. Furthermore, each block shown in Figure 2 may represent one or more such blocks as appropriate to a specific embodiment or may be combined with other blocks. Also, the configuration manager 222 may be implemented in software, hardware, firmware, or in some combination to achieve the capabilities described herein.

As shown, the computing device 200 comprises a computer memory ("memory") 201, a display 202 (including, but not limited to a light emitting diode (LED) panel, cathode ray tube (CRT) display, liquid crystal display (LCD), touch screen display, projector, etc.), one or more Central Processing Units (CPU) or other processors 203, Input/Output (I/O) devices 204 (e.g., keyboard, mouse, RF or infrared receiver, universal serial bus (USB) ports, High-Definition Multimedia Interface (HDMI) ports, other communication ports, and the like), other computer-readable media 205, network connections 206, a power source (or interface to a power source) 207, and audio output 208 (including, but not limited to speakers, buzzers, handphones, etc.). The configuration manager 222 is shown residing in memory 201. In other embodiments, some portion of the contents and some, or all, of the components of the configuration manager 222 may be stored on and/or transmitted over the other computer-readable media 205. The components of the computing device 200 and configuration manager 222 can execute on one or more processors 203 and implement applicable functions described herein. In some embodiments, the configuration manager 222 may operate as, be part of, or work in conjunction and/or cooperation with other software applications stored in memory 201 or on various other computing devices. In some embodiments, the configuration manager 222 also facilitates communication with peripheral devices via the I/O devices 204, or with another device or system via the network connections 206.

The one or more configuration modules 224 is configured to perform actions related, directly or indirectly, to the netlists composing, wire resolution, CT peripheral assignment and configuration, hardware configuration change, or other functions described herein. In some embodiments, the configuration module(s) 224 stores, retrieves, or otherwise accesses at least some configuration-related data on some portion of the configuration data storage 216 or other data storage internal or external to the computing device 200. In various embodiments, at least some of the configuration modules 224 may be implemented in software or hardware.

Other code or programs 230 (e.g., further data processing modules, communication modules, a Web server, and the like), and potentially other data repositories, such as data repository 220 for storing other data, may also reside in the memory 201, and can execute on one or more processors 203. Of note, one or more of the components in Figure 2 may or may not be present in any specific implementation. For example, some embodiments may not provide other computer readable media 205, a display 202, or audio output 208.

In some embodiments, the computing device 200 and configuration manager 222 include API(s) that provides programmatic access to add, remove, or change one or more functions of the computing device 200. In some embodiments, components/modules of the computing device 200 and configuration manager 222 are implemented using standard programming techniques. For example, the configuration manager 222 may be implemented as an executable running on the processor(s) 203, along with one or more static or dynamic libraries. In other embodiments, the computing device 200 and configuration manager 222 may be implemented as instructions processed by a virtual machine that executes as one of the other programs 230. In general, a range of programming languages known in the art may be employed for implementing such example embodiments, including representative implementations of various programming language paradigms, including but not limited to, object-oriented (e.g., Java, C++, C#, Visual Basic.NET, Smalltalk, and the like), functional (e.g., ML, Lisp, Scheme, and the like), procedural (e.g., C, Pascal, Ada, Modula, and the like), scripting (e.g., Perl, Ruby, Python, JavaScript, VBScript, and the like), or declarative (e.g., SQL, Prolog, and the like).

In a software or firmware implementation, instructions stored in a memory configure, when executed, one or more processors of the computing device 200 to perform the functions of the configuration manager 222. In some embodiments, instructions cause the one or more processors 203 or some other processor(s), such as an I/O controller/processor, to perform at least some functions described herein.

The embodiments described above may also use well-known or other synchronous or asynchronous client-server computing techniques. However, the various components may be implemented using more monolithic programming techniques as well, for example, as an executable running on a single CPU computer system, or alternatively decomposed using a variety of structuring techniques known in the art, including but not limited to, multiprogramming, multithreading, client-server, or peer-to-peer, running on one or more computer systems each having one or more CPUs or other processors. Some embodiments may execute concurrently and asynchronously, and communicate using message passing techniques. Equivalent synchronous embodiments are also supported by a configuration manager 222 implementation. Also, other functions could be implemented and/or performed by each component/module, and in different orders, and by different components/modules, yet still achieve the functions of the computing device 200 and configuration manager 222.

In addition, programming interfaces to the data stored as part of the computing device 200 and configuration manager 222, can be available by standard mechanisms such as through C, C++, C#, and Java APIs; libraries for accessing files, databases, or other data repositories; scripting languages such as XML; or Web servers, FTP servers, NFS file servers, or other types of servers providing access to stored data. The configuration data storage 216 and data repository 220 may be implemented as one or more database systems, file systems, or any other technique for storing such information, or any combination of the above, including implementations using distributed computing techniques.

Different configurations and locations of programs and data are contemplated for use with techniques described herein. A variety of distributed computing techniques are appropriate for implementing the components of the illustrated embodiments in a distributed manner including but not limited to TCP/IP sockets, RPC, RMI, HTTP, and Web Services (XML-RPC, JAX-RPC, SOAP, and the like). Other variations are possible. Other functionality could also be provided by each component/module, or existing functionality could be distributed amongst the components/modules in different ways, yet still achieve the functions of the configuration manager 222.

Furthermore, in some embodiments, some or all of the components of the computing device 200 and configuration manager 222 may be implemented or provided in other manners, such as at least partially in firmware and/or hardware, including, but not limited to one or more application-specific integrated circuits ("ASICs"), standard integrated circuits, controllers (e.g., by executing appropriate instructions, and including microcontrollers and/or embedded controllers), field-programmable gate arrays ("FPGAs"), complex programmable logic devices ("CPLDs"), and the like. Some or all of the system components and/or data structures may also be stored as contents (e.g., as executable or other machine-readable software instructions or structured data) on a computer-readable medium (e.g., as a hard disk; a memory; a computer network, cellular wireless network or other data transmission medium; or a portable media article to be read by an appropriate drive or via an appropriate connection, such as a DVD or flash memory device) so as to enable or configure the computer-readable medium and/or one or more associated computing systems or devices to execute or otherwise use, or provide the contents to perform, at least some of the described techniques.

In some embodiments, a computer-implemented method comprises receiving netlist representation of a mother board and at least one expansion board, wherein in accordance with the netlist representation, for each part on the mother board and on the at least one expansion board: the part corresponds to a distinct master node in the netlist representation, and each pin of the part corresponds to a distinct pin node that has a direct link to the master node; creating at least one link between at least one node of the mother board and at least one node of the at least one expansion board based on physical connection between the mother board and the at last one expansion board; incorporating the created at least one link into the netlist representation to logically merge the mother board and the at least one expansion board into a single virtual board; and performing connection path search on the single virtual board, as represented in accordance with the netlist representation, between (a) a pin of a selected part on the mother board or on the at least one expansion board and (b) a configuration target including at least one microprocessor on the mother board or on the at least one expansion board.

In some embodiments, the mother board and the at least one expansion board include one or more printed circuit boards. In some embodiments, the configuration target includes a microcontroller unit (MCU) or a microprocessor unit (MPU).

In some embodiments, the selected part is selected based, at least in part, on an active or non-active status of the part. In some embodiments, any part on the mother board or on the at least one expansion board with a non-active status is excluded from the performing of the connection path search.

In some embodiments, performing the connection path search is based, at least in part, on a graph representing the single virtual board. In some embodiments, performing the connection path search is based, at least in part, on breadth-first search (BFS).

In some embodiments, the method comprises creating at least one second link between at least one node of the mother board or the at least one expansion board and at least one node of a standalone part, based on physical connection between the mother board or the at last one expansion board and the standalone part. In some embodiments, the created at least one second link is incorporated into the netlist representation.

In some embodiments, a non-transitory computer-readable medium stores contents that cause one or more processors to perform actions. The actions comprise: receiving netlist representation of a mother board and at least one expansion board, wherein in accordance with the netlist representation, for each part on the mother board and on the at least one expansion board: the part corresponds to a distinct master node in the netlist representation, and each pin of the part corresponds to a distinct pin node that has a direct link to the master node; creating at least one link between at least one node of the mother board and at least one node of the at least one expansion board based on physical connection between the mother board and the at last one expansion board; incorporating the created at least one link into the netlist representation to logically merge the mother board and the at least one expansion board into a single virtual board; and performing connection path search on the single virtual board, as represented in accordance with the netlist representation, between (a) a pin of a selected part on the mother board or on the at least one expansion board and (b) a configuration target including at least one microprocessor on the mother board or on the at least one expansion board.

In some embodiments, the selected part is selected based, at least in part, on an active or non-active status of the part.

In some embodiments, performing the connection path search is based, at least in part, on a graph representing the single virtual board. In some embodiments, performing the connection path search is based, at least in part, on breadth-first search (BFS).

In some embodiments, the actions comprise creating at least one second link between at least one node of the mother board or the at least one expansion board and at least one node of a standalone part, based on physical connection between the mother board or the at last one expansion board and the standalone part. In some embodiments, the created at least one second link is incorporated into the netlist representation.

In some embodiments, a system comprises one or more processors; and memory storing contents that, when executed by the one or more processors, cause the system to perform actions. The actions comprise: receiving netlist representation of a mother board and at least one expansion board, wherein in accordance with the netlist representation, for each part on the mother board and on the at least one expansion board: the part corresponds to a distinct master node in the netlist representation, and each pin of the part corresponds to a distinct pin node that has a direct link to the master node; creating at least one link between at least one node of the mother board and at least one node of the at least one expansion board based on physical connection between the mother board and the at last one expansion board; incorporating the created at least one link into the netlist representation to logically merge the mother board and the at least one expansion board into a single virtual board; and performing connection path search on the single virtual board, as represented in accordance with the netlist representation, between (a) a pin of a selected part on the mother board or on the at least one expansion board and (b) a configuration target including at least one microprocessor on the mother board or on the at least one expansion board.

In some embodiments, the configuration target includes a microcontroller unit (MCU) or a microprocessor unit (MPU). In some embodiments, the selected part is selected based, at least in part, on an active or non-active status of the part. In some embodiments, performing the connection path search is based, at least in part, on a graph representing the single virtual board. In some embodiments, the actions comprise incorporating into the netlist representation at least one second link between at least one node of the mother board or the at least one expansion board and at least one node of a standalone part, based on physical connection between the mother board or the at last one expansion board and the standalone part.

In some embodiments, a computer-implemented method comprises: for each pin of a plurality of pins of a selected part on a physical or virtual board, determining a signal that is configured to come in or out of the pin and creating an association between the signal and the pin; for each pin of the plurality of pins of the selected part on the physical or virtual board, determining a connection path between the pin and a pin of a configuration target and creating a mapping between the pin of the selected part and the pin of the configuration target; merging the associations and the mappings for the plurality of pins of the selected part to detect whether there is an incompatible signal associated with a pin of the selected part; and responsive to detecting an incompatible signal associated with a pin of the selected part, searching for an alternative hardware configuration to change at least one mapping between a pin of the selected part and a pin of the configuration target. In some embodiments, searching for the alternative hardware configuration includes changing electrical board routing, for example, by changing configuration of at least one of a soldered bridge, switch, or jumper.

In some embodiments, the physical or virtual board includes a printed circuit board. In some embodiments, the configuration target includes a microcontroller unit (MCU) or a microprocessor unit (MPU). In some embodiments, at least one of the determining of the signal or the determining of the connection path is based, at least in part, on a netlist representing the physical or virtual board. In some embodiments, the connection path determined is a shortest path connection. In some embodiments, the association between the signal and the pin and the mapping between the pin of the selected part and the pin of the configuration target are represented in a format of database table.

In some embodiments, the method comprises detecting whether there is a conflict with the created mappings between individual pins of the selected part and individual pins of the configuration target. In some embodiments, the method comprises responsive to detecting a conflict with the created mappings, searching for an alternative hardware configuration including changing electrical board routing, for example, by changing configuration of at least one of a soldered bridge, switch, or jumper to change at least one mapping between a pin of the selected part and a pin of the configuration target.

In some embodiments, a non-transitory computer-readable medium stores contents that cause one or more processors to perform actions. The actions comprise: for each pin of a plurality of pins of a selected part on a physical or virtual board, determining a signal that is configured to come in or out of the pin and creating an association between the signal and the pin; for each pin of the plurality of pins of the selected part on the physical or virtual board, determining a connection path between the pin and a pin of a configuration target and creating a mapping between the pin of the selected part and the pin of the configuration target; merging the associations and the mappings for the plurality of pins of the selected part to detect whether there is an incompatible signal associated with a pin of the selected part; and responsive to detecting an incompatible signal associated with a pin of the selected part, searching for an alternative hardware configuration to change at least one mapping between a pin of the selected part and a pin of the configuration target. In some embodiments, searching for the alternative hardware configuration includes changing electrical board routing, for example, by changing configuration of at least one of a soldered bridge, switch, or jumper.

In some embodiments, at least one of the determining of the signal or the determining of the connection path is based, at least in part, on a netlist representing the physical or virtual board. In some embodiments, the connection path determined is a shortest path connection. In some embodiments, the association between the signal and the pin and the mapping between the pin of the selected part and the pin of the configuration target are represented in a format of database table.

In some embodiments, the actions comprise detecting whether there is a conflict with the created mappings between individual pins of the selected part and individual pins of the configuration target. In some embodiments, the actions comprise responsive to detecting a conflict with the created mappings, searching for an alternative hardware configuration including changing electrical board routing, for example, by changing configuration of at least one of a soldered bridge, switch, or jumper to change at least one mapping between a pin of the selected part and a pin of the configuration target.

In some embodiments, a system comprises: one or more processors; and memory storing contents that, when executed by the one or more processors, cause the system to perform actions. The actions comprise: for each pin of a plurality of pins of a selected part on a physical or virtual board, determining a signal that is configured as inbounding or outbounding the pin and creating an association between the signal and the pin; for each pin of the plurality of pins of the selected part on the physical or virtual board, determining a connection path between the pin and a pin of a configuration target and creating a mapping between the pin of the selected part and the pin of the configuration target; merging the associations and the mappings for the plurality of pins of the selected part to detect whether there is an incompatible signal associated with a pin of the selected part; and responsive to detecting an incompatible signal associated with a pin of the selected part, searching for an alternative hardware configuration to change at least one mapping between a pin of the selected part and a pin of the configuration target. In some embodiments, searching for the alternative hardware configuration includes changing electrical board routing, for example, by changing configuration of at least one of a soldered bridge, switch, or jumper.

In some embodiments, the configuration target includes a microcontroller unit (MCU) or a microprocessor unit (MPU). In some embodiments, at least one of the determining of the signal or the determining of the connection path is based, at least in part, on a netlist representing the physical or virtual board. In some embodiments, the connection path determined is a shortest path connection.

In some embodiments, the actions comprise detecting whether there is a conflict with the created mappings between individual pins of the selected part and individual pins of the configuration target. In some embodiments, the actions comprise responsive to detecting a conflict with the created mappings, searching for an alternative hardware configuration including changing electrical board routing, for example, by changing configuration of at least one of a soldered bridge, switch, or jumper to change at least one mapping between a pin of the selected part and a pin of the configuration target.

In some embodiments, a computer-implemented method comprises: for each configuration target (CT) pin of a subset of CT pins that are grouped using a distinct semantic label associated with a board part, selecting a CT signal among supported CT signals for the CT pin, wherein the CT signals selected for the subset of CT pins correspond to a target CT peripheral instance of a plurality of CT peripheral instances; determining whether the CT signals selected are available for use and whether the target CT peripheral instance is available to be assigned; and performing at least one of: responsive to determining that the CT signals selected are available for use and the target CT peripheral instance is available to be assigned: associating the subset of CT pins with the CT signals selected and assigning the target CT peripheral instance to the board part; and marking the CT signals selected as unavailable for use and the target CT peripheral instance as unavailable to be assigned; or responsive to determining that the CT signals selected are unavailable for use or the target CT peripheral is unavailable to be assigned: searching for an alternative hardware configuration of a physical or virtual board that accommodates the CT and the board part, including changing electrical board routing, for example, by changing configuration of at least one of a soldered bridge, switch, or jumper.

In some embodiments, the physical or virtual board includes a printed circuit board. In some embodiments, the CT includes a microcontroller unit (MCU) or a microprocessor unit (MPU). In some embodiments, the semantic label indicates a particular bus. In some embodiments, the semantic label represents a tuple of signals of the board part. In some embodiments, the selecting of the CT signal is based on a signal of a pin of the board part mapped to the CT pin. In some embodiments, the selecting of the CT signal is based on the semantic label without considering any pin of the board part. In some embodiments, the target CT peripheral instance is assigned to two or more board parts.

In some embodiments, a non-transitory computer-readable medium stores contents that cause one or more processors to perform actions. The actions comprise: for each configuration target (CT) pin of a subset of CT pins that are grouped using a distinct semantic label associated with a board part, selecting a CT signal among supported CT signals for the CT pin, wherein the CT signals selected for the subset of CT pins correspond to a target CT peripheral instance of a plurality of CT peripheral instances; determining whether the CT signals selected are available for use and whether the target CT peripheral instance is available to be assigned; and performing at least one of: responsive to determining that the CT signals selected are available for use and the target CT peripheral instance is available to be assigned: associating the subset of CT pins with the CT signals selected and assigning the target CT peripheral instance to the board part; and marking the CT signals selected as unavailable for use and the target CT peripheral instance as unavailable to be assigned; or responsive to determining that the CT signals selected are unavailable for use or the target CT peripheral is unavailable to be assigned: searching for an alternative hardware configuration of a physical or virtual board that accommodates the CT and the board part, including changing electrical board routing, for example, by changing configuration of at least one of a soldered bridge, switch, or jumper.

In some embodiments, the semantic label indicates a particular bus. In some embodiments, the semantic label represents a tuple of signals of the board part. In some embodiments, the selecting of the CT signal is based on a signal of a pin of the board part mapped to the CT pin. In some embodiments, the selecting of the CT signal is based on the semantic label without considering any pin of the board part. In some embodiments, the target CT peripheral instance is assigned to two or more board parts.

In some embodiments, a system comprises: one or more processors; and memory storing contents that, when executed by the one or more processors, cause the system to perform actions. The actions comprise: for each configuration target (CT) pin of a subset of CT pins that are grouped using a distinct semantic label associated with a board part, selecting a CT signal among supported CT signals for the CT pin, wherein the CT signals selected for the subset of CT pins correspond to a target CT peripheral instance of a plurality of CT peripheral instances; determining whether the CT signals selected are available for use and whether the target CT peripheral instance is available to be assigned; and performing at least one of: responsive to determining that the CT signals selected are available for use and the target CT peripheral instance is available to be assigned: associating the subset of CT pins with the CT signals selected and assigning the target CT peripheral instance to the board part; and marking the CT signals selected as unavailable for use and the target CT peripheral instance as unavailable to be assigned; or responsive to determining that the CT signals selected are unavailable for use or the target CT peripheral is unavailable to be assigned: searching for an alternative hardware configuration of a physical or virtual board that accommodates the CT and the board part, including changing electrical board routing, for example, by changing configuration of at least one of a soldered bridge, switch, or jumper.

In some embodiments, the CT includes a microcontroller unit (MCU) or a microprocessor unit (MPU). In some embodiments, the semantic label indicates a particular bus. In some embodiments, the semantic label represents a tuple of signals of the board part. In some embodiments, the selecting of the CT signal is based on a signal of a pin of the board part mapped to the CT pin. In some embodiments, the selecting of the CT signal is based on the semantic label without considering any pin of the board part.

In some embodiments, a computer-implemented method comprises: for each board part of a set of board parts configured to connect to a configuration target (CT) peripheral instance of a CT, obtaining part characteristics for operating the board part; determining a minimum subset of compatibility parameters among the part characteristics obtained for operating individual board parts of the set of board parts; determining whether the minimum subset of compatibility parameters is compatible with the CT peripheral instance; and performing at least one of: responsive to determining that the minimum subset of compatibility parameters is compatible with the CT peripheral instance, applying to the CT peripheral instance the minimum subset of compatibility parameters; or responsive to determining that the minimum subset of compatibility parameters is incompatible with the CT peripheral instance, searching for an alternative hardware configuration of a physical or virtual board that accommodates the CT and the set of board parts, including changing electrical board routing, for example, by changing configuration of at least one of a soldered bridge, switch, or jumper.

In some embodiments, the physical or virtual board includes a printed circuit board. In some embodiments, the CT includes a microcontroller unit (MCU) or a microprocessor unit (MPU).

In some embodiments, the part characteristics include hardware constraints or limitations. In some embodiments, the hardware constraints or limitations include at least one of bus working frequency, SPI polarity, or I2C address.

In some embodiments, the set of board parts consists of a single board part. In some embodiments, the minimum subset of compatibility parameters is the obtained part characteristics for operating the single board part.

In some embodiments, applying to the CT peripheral instance the minimum subset of compatibility parameters comprises configuring the CT peripheral instance based on a portion of the minimum subset compatible with characteristics of the CT peripheral instance.

In some embodiments, a non-transitory computer-readable medium stores contents that cause one or more processors to perform actions. The actions comprise: for each board part of a set of board parts configured to connect to a configuration target (CT) peripheral instance of a CT, obtaining part characteristics for operating the board part; determining a minimum subset of compatibility parameters among the part characteristics obtained for operating individual board parts of the set of board parts; determining whether the minimum subset of compatibility parameters is compatible with the CT peripheral instance; and performing at least one of: responsive to determining that the minimum subset of compatibility parameters is compatible with the CT peripheral instance, applying to the CT peripheral instance the minimum subset of compatibility parameters; or responsive to determining that the minimum subset of compatibility parameters is incompatible with the CT peripheral instance, searching for an alternative hardware configuration of a physical or virtual board that accommodates the CT and the set of board parts, including changing electrical board routing, for example, by changing configuration of at least one of a soldered bridge, switch, or jumper.

In some embodiments, the part characteristics include hardware constraints or limitations. In some embodiments, the hardware constraints or limitations include at least one of bus working frequency, SPI polarity, or I2C address.

In some embodiments, the set of board parts consists of a single board part. In some embodiments, the minimum subset of compatibility parameters is the obtained part characteristics for operating the single board part.

In some embodiments, applying to the CT peripheral instance the minimum subset of compatibility parameters comprises configuring the CT peripheral instance based on a portion of the minimum subset compatible with characteristics of the CT peripheral instance.

In some embodiments, a system comprises: one or more processors; and memory storing contents that, when executed by the one or more processors, cause the system to perform actions. The actions comprise: for each board part of a set of board parts configured to connect to a configuration target (CT) peripheral instance of a CT, obtaining part characteristics for operating the board part; determining a minimum subset of compatibility parameters among the part characteristics obtained for operating individual board parts of the set of board parts; determining whether the minimum subset of compatibility parameters is compatible with the CT peripheral instance; and performing at least one of: responsive to determining that the minimum subset of compatibility parameters is compatible with the CT peripheral instance, applying to the CT peripheral instance the minimum subset of compatibility parameters; or responsive to determining that the minimum subset of compatibility parameters is incompatible with the CT peripheral instance, searching for an alternative hardware configuration of a physical or virtual board that accommodates the CT and the set of board parts, including changing electrical board routing, for example, by changing configuration of at least one of a soldered bridge, switch, or jumper.

In some embodiments, the CT includes a microcontroller unit (MCU) or a microprocessor unit (MPU). In some embodiments, the part characteristics include hardware constraints or limitations.

In some embodiments, the set of board parts consists of a single board part. In some embodiments, the minimum subset of compatibility parameters is the obtained part characteristics for operating the single board part.

In some embodiments, applying to the CT peripheral instance the minimum subset of compatibility parameters comprises configuring the CT peripheral instance based on a portion of the minimum subset compatible with characteristics of the CT peripheral instance.

The various embodiments described above can be combined to provide further embodiments. These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1. A computer-implemented method, comprising:
- receiving netlist representation of a mother board and at least one expansion board, wherein in accordance with the netlist representation, for each part on the mother board and on the at least one expansion board:
- the part corresponds to a distinct master node in the netlist representation, and
- each pin of the part corresponds to a distinct pin node that has a direct link to the master node;
- creating at least one link between at least one node of the mother board and at least one node of the at least one expansion board based on physical connection between the mother board and the at last one expansion board;
- incorporating the created at least one link into the netlist representation to logically merge the mother board and the at least one expansion board into a single virtual board; and
- performing connection path search on the single virtual board, as represented in accordance with the netlist representation, between (a) a pin of a selected part on the mother board or on the at least one expansion board and (b) a configuration target including at least one microprocessor on the mother board or on the at least one expansion board.

2. A non-transitory computer-readable medium storing contents that cause one or more processors to perform actions, the actions comprising:
- receiving netlist representation of a mother board and at least one expansion board, wherein in accordance with the netlist representation, for each part on the mother board and on the at least one expansion board:
- the part corresponds to a distinct master node in the netlist representation, and
- each pin of the part corresponds to a distinct pin node that has a direct link to the master node;
- creating at least one link between at least one node of the mother board and at least one node of the at least one expansion board based on physical connection between the mother board and the at last one expansion board;
- incorporating the created at least one link into the netlist representation to logically merge the mother board and the at least one expansion board into a single virtual board; and
- performing connection path search on the single virtual board, as represented in accordance with the netlist representation, between (a) a pin of a selected part on the mother board or on the at least one expansion board and (b) a configuration target including at least one microprocessor on the mother board or on the at least one expansion board.

3. A system, comprising:
- one or more processors; and
- memory storing contents that, when executed by the one or more processors, cause the system to perform actions comprising:
- receiving netlist representation of a mother board and at least one expansion board, wherein in accordance with the netlist representation, for each part on the mother board and on the at least one expansion board:
- the part corresponds to a distinct master node in the netlist representation, and
- each pin of the part corresponds to a distinct pin node that has a direct link to the master node;
- creating at least one link between at least one node of the mother board and at least one node of the at least one expansion board based on physical connection between the mother board and the at last one expansion board;
- incorporating the created at least one link into the netlist representation to logically merge the mother board and the at least one expansion board into a single virtual board; and
- performing connection path search on the single virtual board, as represented in accordance with the netlist representation, between (a) a pin of a selected part on the mother board or on the at least one expansion board and (b) a configuration target including at least one microprocessor on the mother board or on the at least one expansion board.

4. The method of claim 1, wherein the mother board and the at least one expansion board include one or more printed circuit boards.

5. The method of claim 1 or 4, or the system of claim 3, wherein the configuration target includes a microcontroller unit (MCU) or a microprocessor unit (MPU).

6. The method of any of claims 1, 4 and 5, or the non-transitory computer-readable medium of claim 2, or the system of claim 3 or 5, wherein the selected part is selected based, at least in part, on an active or non-active status of the part.

7. The method of claim 6, wherein any part on the mother board or on the at least one expansion board with a non-active status is excluded from the performing of the connection path search.

8. The method of any of claims 1, 4 to 7, or the non-transitory computer-readable medium of claim 2 or 6, or the system of any of claims 3, 5 and 6, wherein performing the connection path search is based, at least in part, on a graph representing the single virtual board.

9. The method or the non-transitory computer-readable medium of claim 8, wherein performing the connection path search is based, at least in part, on breadth-first search (BFS).

10. The method of any of claims 1, 4 to 9 comprising, or the non-transitory computer-readable medium of any claims 2, 6, 8 and 9, wherein the actions comprise creating at least one second link between at least one node of the mother board or the at least one expansion board and at least one node of a standalone part, based on physical connection between the mother board or the at last one expansion board and the standalone part.

11. The method of claim 10 comprising, or the non-transitory computer-readable medium of claim 10, wherein the actions comprise wherein the created at least one second link is incorporated into the netlist representation.

12. The system of any of claims 3, 5, 6 and 8, wherein the actions comprise incorporating into the netlist representation at least one second link between at least one node of the mother board or the at least one expansion board and at least one node of a standalone part, based on physical connection between the mother board or the at last one expansion board and the standalone part.
